# EUROPEAN PATENT APPLICATION

(11) **EP 2 963 534 A1**
(43) Date of publication of application: **06.01.2016**
(21) Application number: 13876591.2
(22) Date of filing: 12.08.2013
(51) Int. Cl.: G06F 3/0488

(54) **METHOD AND SYSTEM FOR UNLOCKING SCREEN OF MOBILE PHONE**

(30) Priority: 27.02.2013 CN 201310061546
(71) Applicant: Huizhou TCL Mobile Communication Co., Ltd., Hui Zhou Guangdong 516006 (CN)
(72) Inventor: CHAI, Feifei, Ningbo Zhejiang 315040 (CN); CHEN, Jianqiang, Ningbo Zhejiang 315040 (CN)
(74) Representative: Brachmann, Roland W.
(86) International application number: PCT/CN2013/081267
(87) International publication number: WO 2014/131268

(57) **Abstract**

Disclosed are a method and system for unlocking a screen of a mobile phone. The method comprises: an operating instruction of a user to light up the screen is received by the mobile phone that is in a screen-locked state and enters an unlocking interface; when a touch event is detected within a predetermined time, touched region information corresponding to the touch event is acquired, and a touched area is calculated on the basis of the touched region information; the touched area is compared with a predetermined threshold value, and, when the touched area is greater than the threshold value, the touch event is determined to have satisfied a criterion for unlocking, and the screen of the mobile phone is controlled into unlocking, otherwise, unlock failed information is returned to the user. The present invention implements unlocking of the screen of the mobile phone by means of large-area touching of the screen of the mobile phone, reduces requirement for precision in touch points and slide track when unlocking the screen, simplifies user operation, and also facilitates an increase in security when unlocking the mobile phone.

## Description

### Technical Field

The present invention relates to the field of mobile terminal. In particular, it relates to a method and system for unlocking a mobile phone screen through touching a region with certain area.

### Background Art

With the development of mobile terminal technology, almost each of the smart phones currently available on the market has a touch screen. In order to prevent an accidental touching on the screen which may result in an undesired operation, a wide variety of methods for locking smart phone screen have been proposed. Accordingly, a wide variety of corresponding methods for unlocking the smart phone screen have also appeared, such as sliding up and down (vertically), sliding left and right (horizontally), drawing an arc or drawing other specific shapes and so on.

In summary, methods for unlocking mobile phone screen in the existing technology have the feature of unlocking through touching on a small area and sliding with specific track. Limited by size of mobile phone screen and size of human fingers, and other factors as well, these unlocking methods have quite high requirements for accuracies of touching point and sliding track. As a result, unlocking attempts can easily fail, users often need to make multiple attempts in order to successfully unlock the screen, which is an inconvenience to the users.

Therefore, the prior art is yet to be modified and improved.

### Summary of Invention

The technical problem the present invention is aimed to solve is, to address the deficiencies in the existing technology, and provide a method and system for accomplishing mobile phone screen unlocking through touching on a region with certain area. It is aimed to solve the problem that in the currently available methods for unlocking mobile phone screen, the requirements for the accuracies of touching point and sliding track are quite high.

In order to solve the above identified technical problem, the present invention employs the technical solution set forth below:
A method for unlocking a mobile phone screen, wherein, comprising the steps as follows:
   S1, in a locking state, the mobile phone receiving an instruction from a user, lighting up the screen, and entering an unlocking interface, detecting whether a touching event occurs within a pre-determined time period; if the touching event is detected, entering the next step, otherwise, turning off the backlight of the mobile phone screen, and then repeating this step;
   S2, obtaining information of a touching region corresponding to the touching event, and calculating a touching area according to the information of the touching region;
   S3, comparing the touching area with a pre-determined threshold, and determining whether the touching event satisfies a condition required for unlocking;
   S4, when the touching area is greater than the threshold, determining that the touching event satisfies the condition required for unlocking, and controlling to unlock the mobile phone screen, otherwise, returning information of unlocking failure to the user.

The method for unlocking a screen of a mobile phone as mentioned above, wherein the method further comprises a step prior to the step S 1:
S0, pre-setting a threshold for determining whether unlock the screen of the mobile phone according to a size of the screen and a size of a palm of the user.

The method for unlocking a screen of a mobile phone as mentioned above, wherein, the information of touching region mentioned in the step S2 is: profile information of coordinate matrix of the touching region.

The method for unlocking a screen of a mobile phone as mentioned above, wherein, the step of calculating a touching area according to the information of the touching region in the step S2 is: dividing the touching region into a plurality of regular small shapes according to the profile information of coordinate matrix of the touching region, respectively calculating areas of the plurality of regular small shapes, and then adding together, so as to obtain the touching area.

The method for unlocking a screen of a mobile phone as mentioned above, the threshold is 20 square centimeters.

A system for unlocking a screen of a mobile phone, comprises:
- the detection module, which is for detecting, when the mobile phone enters an unlocking interface, whether a touching event occurs on the screen of the mobile phone within a pre-determined time period, and when one touching event has been detected, obtaining information of a touching region corresponding to the touching event, and sending to the calculation module, otherwise, controlling to turnoff a backlight of the screen of the mobile phone;
- the calculation module, which is for calculating a touching area according to the information of the touching region;
- the determination module, which is for comparing the touching area with a pre-determined threshold, and determining whether the touching event satisfies a condition required for unlocking, when the touching area is greater than the pre-determined threshold, making the determination that the touching event satisfies the condition required for unlocking, and sending an instruction for unlocking to the control module, otherwise, sending an instruction of unlocking failure to the control module;
- the control module, which is for, when receiving the instruction for unlocking, controlling to unlock the screen of the mobile phone, and when receiving the instruction of unlocking failure, returning information of unlocking failure to the user.

The system for unlocking a screen of a mobile phone as mentioned above, wherein, further comprises:
- the setting module, which is for setting the threshold for determining whether unlock the screen of the mobile phone according to the size of the screen and the size of the user's palm.

The system for unlocking a screen of a mobile phone as mentioned above, wherein,
- the information of the touching region is: profile information of coordinate matrix of the touching region;
- the threshold is 20 square centimeters.

The system for unlocking a screen of a mobile phone as mentioned above, wherein, the calculation module comprises:
- the dividing unit, which is for dividing the touching region into a plurality of regular small shapes according to the profile information of coordinate matrix of the touching region, and then respectively calculating areas of the plurality of regular small shapes;
- the addition unit, which is for adding the areas of the plurality of regular small shapes together, so as to obtain the touching area.

The present invention provides a method and system for unlocking a mobile phone screen via touching on a region with certain area. By virtue of touching a relatively large area on a mobile phone screen, it is able to achieve the purpose of unlocking mobile phone screen quickly and conveniently. Its beneficial effects include: when unlocking the mobile phone screen, the requirements for accuracies of touching point and sliding track have been lowered, the user operation has been simplified; in addition, the present invention renders a mobile phone a new function: when the mobile phone enters unlocking interface, according to the detected operation event of a large screen area touched by a user, controlling the mobile phone to quickly unlock its screen, so as to provide convenience to the user.

### Description of Drawings

- Figure 1: is a flow diagram of an embodiment of the method for unlocking a mobile phone screen in the present invention.
- Figure 2: is a diagram of the mechanism of an embodiment of the system for unlocking a mobile phone screen in the present invention.
- Figure 3: is a diagram of the mechanism of the calculation module of an embodiment of the system for unlocking a mobile phone screen in the present invention.

### Description of Embodiments

In order to make the aim of the present invention and the advantages of its technical solution become more clear and definite, the present invention will be described in details as follows in reference to the accompanying drawings and exemplary embodiments. It is understood that the exemplary embodiments described in the present application are for the purpose of description only, and are not to limit the present invention.

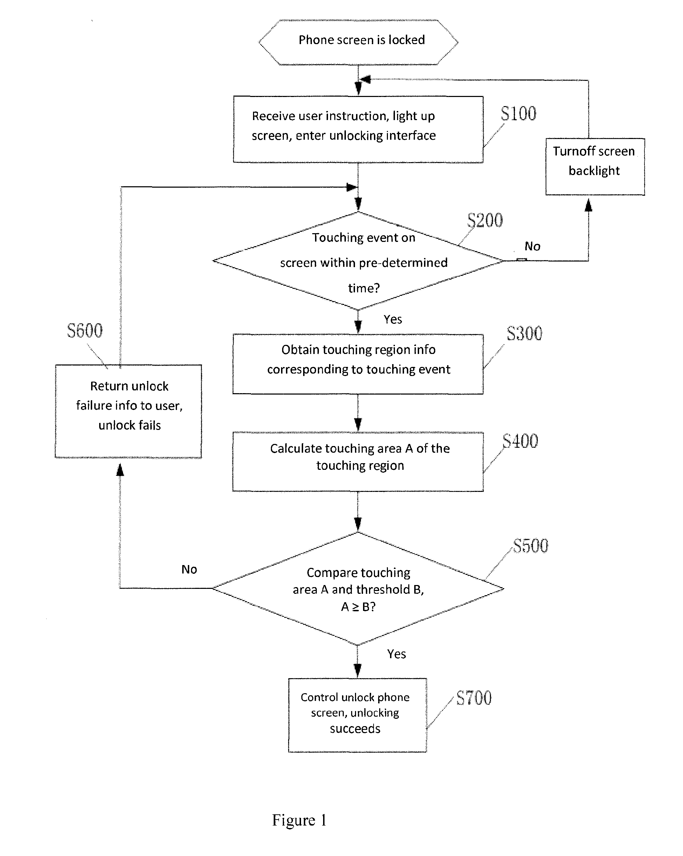

In reference to Figure 1, Figure 1 is a flow diagram of an embodiment of the method for unlocking a mobile phone screen in the present invention. In this embodiment, the mobile phone is in a locking state. In order to unlock the mobile phone screen, the necessary procedures are set forth below:
- S100,: the mobile phone receiving an instruction from a user, lighting up the screen, and entering an unlocking interface; that is to say, when the mobile phone screen is in a locking state, a user operates a related key or button to light up the screen, and accordingly, initiate the unlocking program to enter the unlocking interface.
- S200,: detecting whether a touching event occurs within a pre-determined time period. In operation, an internal timer of the mobile phone may be started at the same time when the mobile phone enters the unlocking interface. In a case if no touching event has been detected during the pre-determined time period, turning off the backlight of the mobile phone screen, and going back to the step S100; while if a touching event has been detected on the mobile phone screen, enters the step S300.
- S300,: obtaining information of a touching region corresponding to the touching event; more specifically, following the mobile phone entered the unlocking interface and before the above mentioned timer stops, the user uses his or her palm to touch the screen of the mobile phone. In this way, the mobile phone is able to detect this touching event, and then obtain the profile information of coordinate matrix of the touching region which is corresponding to this touching event.
- S400,: calculating a touching area according to the information of the touching region; preferably, in this embodiment, according to the obtained profile information of coordinate matrix dividing the touching region into a plurality of regular small shapes, respectively calculating areas of the plurality of regular small shapes, and then adding them together, so as to obtain the touching area, which is referred to as A.
- S500,: comparing the touching area A with a pre-determined threshold B, and determining whether the touching event satisfies a condition required for unlocking, in other words, determining whether the relation of A ≥ B has been satisfied. In a case of A ≥ B, it could be determined that the touching event satisfies the condition required for unlocking, and then enters the step S700; otherwise, it could be determined that the touching event does not satisfy the condition required for unlocking, and goes to step S600.
- S600,: returning information of unlocking failure to the user; the unlocking fails and returns to the step S200.
- S700,: controlling to unlock the mobile phone screen; the unlocking succeeds.

Preferably, in the method for unlocking a mobile phone screen in the present invention, it also needs to pre-set the threshold B for determining whether unlock the mobile phone screen. Preferably, in this embodiment, the threshold B has been set according to the size of the screen and the size of the user's palm. For example, it is known that the length and width of the palm of an average person is about 5 to 7 cm. Accordingly, when a user using his or her palm to touch a mobile phone careen, the theoretical contact area could be at least 25 square centimeters. In this regard, the threshold B could be set as 25 square centimeters. As a result, when unlocking a mobile phone screen, when the area of the mobile phone screen touched by the user's palm is equal to or larger than 25 square centimeters, it could be determined that the current touching event satisfies the condition required for unlocking, and thus the unlocking succeeds.

Preferably, considering the fact that it is quite difficult to make every point of the user's palm sufficiently touch the mobile phone screen, it is very possible that the actual touching area is smaller than 25 square centimeters. Accordingly, in order to avoid making a wrong determination, it is preferably to set the threshold as 20 square centimeters. That is to say, when unlocking a mobile phone screen, when the area of the mobile phone screen touched by the user's palm is equal to or larger than 20 square centimeters, it could be determined that the current touching event satisfies the condition required for unlocking, thus the unlocking succeeds.

On the other hand, due to the fact that some mobile phones have quite large screens, such as the mobile phone screens of 4 in or 5 in, or even bigger (such as the screen of a tablet computer), in such cases, when a user's palm is touching the screen of the above mentioned devices, the contact area may actually cover the user's whole palm, in other words, the contact area not only includes the contact area of the palm and the screen, but also includes the contact area of the fingers and the screen. As a result, the actual touching area may be way larger than 20 square centimeters. In such a case, the threshold can still be set as 20 square centimeters. Accordingly, the user can easily unlock the mobile phone screen. Of course, the user may set the threshold as 30 square centimeters, which could help to improve unlocking security.

In addition, a user can also set a specific threshold B corresponding to the shape of his or her hand, so as to render the unlocking operation more personal characteristics, which may further improve the unlocking security for mobile phone or other devices. It is noted that the setting of the threshold includes but is not limited to the above described embodiments.

In light of the foregoing, when adopting the method for unlocking a mobile phone screen provided in the embodiments of the present invention, a user is able to unlock a mobile phone screen quickly and conveniently, with no requirement for touching operation of high accuracy, and with no requirement for specific sliding track as well. As a result, it has simplified user operation, and meanwhile, improved unlocking security.

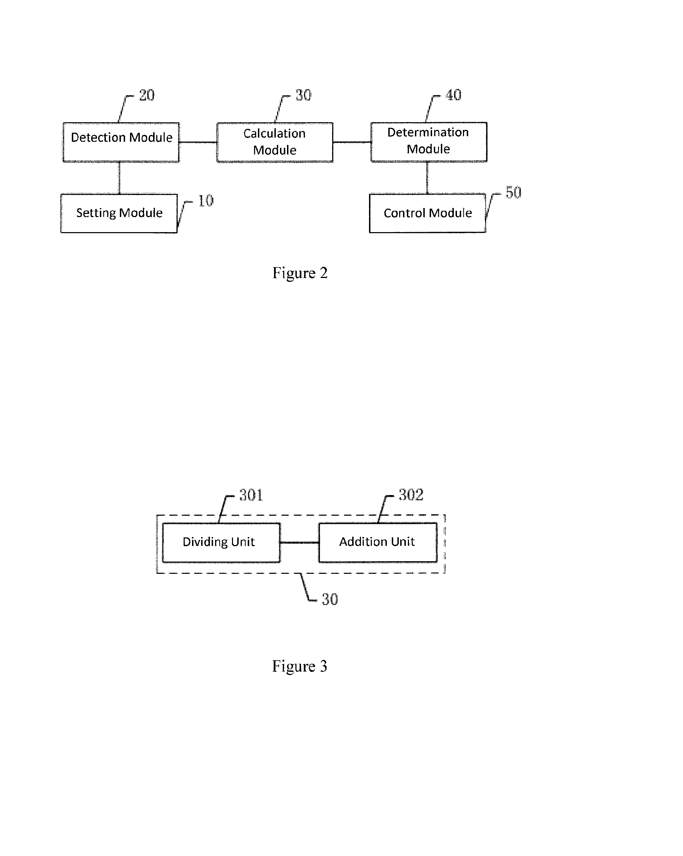

Based on the embodiments set forth above, the present invention also provides a system for unlocking a screen of a mobile phone. As shown in Figure 2, the system of the embodiment includes:
- The setting module 10, which is for setting the threshold for determining whether unlock the screen of the mobile phone according to a size of the screen and a size of a palm of the user; the setting of the threshold is as described in the above embodiments. Preferably, the threshold is set as 20 square centimeters.
- The detection module 20, which is for detecting, when the mobile phone enters an unlocking interface, whether a touching event occurs on the screen of the mobile phone within a pre-determined time period, and when one touching event has been detected, obtaining information of a touching region corresponding to the touching event, and sending to a calculation module, otherwise, controlling to turnoff a backlight of the screen of the mobile phone. Its details are as described in the above embodiments. Preferably, the touching region information mentioned in this embodiment is the profile information of coordinate matrix of the touching region.
- The calculation module 30, which is for calculating a touching area according to the information of the touching region; its details are as described in the above embodiments.
- The determination module 40, which is for comparing the touching area with a pre-determined threshold, and determining whether the touching event satisfies a condition required for unlocking, when the touching area is greater than the pre-determined threshold, making the determination that the touching event satisfies the condition required for unlocking, and sending an instruction for unlocking to a control module, otherwise, sending an instruction of unlocking failure to the control module. Its details are as described in the above embodiments.
- The control module 50, which is for, when receiving the instruction for unlocking, controlling to unlock the screen of the mobile phone, and when receiving the instruction of unlocking failure, returning information of unlocking failure to the user. Its details are as described in the above embodiments.

Preferably, as shown in Figure 3, the above mentioned calculation module 30 also specifically includes:
- The dividing unit 301, which is for dividing the touching region into a plurality of regular small shapes according to the profile information of coordinate matrix of the touching region, and then respectively calculating areas of the plurality of regular small shapes; and
- the addition unit 302, which is for adding the areas of the plurality of regular small shapes together, so as to obtain the touching area; the details are as described in the above embodiments.

In summary, the present invention provides a method and system for unlocking a mobile phone screen. It has accomplished the aim of unlocking a mobile phone screen via touching a large area of the mobile phone screen. When unlocking the mobile phone screen, the requirements for accuracies of touching point and sliding track have been lowered, the user operation has been simplified; in addition, it helps to improve unlocking security.

It should be understood that the applications of the present invention are not limited to the above examples. A person of ordinary skill in the art is able to make modifications or alternations according to the above description. All such modifications and alternations should fall within the scope of the appended claims of the present invention.

## Claims

1. A method for unlocking a screen of a mobile phone, **characterized by**, comprising the steps set forth below:
S1, in a locking state, the mobile phone receiving an instruction from a user, lighting up the screen, and entering an unlocking interface, detecting whether a touching event occurs within a pre-determined time period; if the touching event is detected, entering a next step, otherwise, turning off a backlight of the screen of the mobile phone, and repeating this step;
S2, obtaining information of a touching region corresponding to the touching event, and calculating a touching area according to the information of the touching region;
S3, comparing the touching area with a pre-determined threshold, and determining whether the touching event satisfies a condition required for unlocking;
S4, when the touching area is larger than the threshold, determining that the touching event satisfies the condition required for unlocking, and controlling to unlock the screen of the mobile phone, otherwise, returning information of unlocking failure to the user.

2. The method for unlocking a screen of a mobile phone as claimed in claim 1, **characterized in that** the method also comprising a step prior to the step S 1:
S0, pre-setting a threshold for determining whether unlock the screen of the mobile phone according to a size of the screen and a size of a palm of the user.

3. The method for unlocking a screen of a mobile phone as claimed in claim 1, **characterized in that** the information of the touching region in the step S2 is:
profile information of coordinate matrix of the touching region.

4. The method for unlocking a screen of a mobile phone as claimed in claim 3, **characterized in that** the step of calculating a touching area according to the information of the touching region in the step S2 is: dividing the touching region into a plurality of regular small shapes according to the profile information of coordinate matrix of the touching region, and respectively calculating areas of the plurality of regular small shapes, and then adding together, so as to obtain the touching area.

5. The method for unlocking a screen of a mobile phone as claimed in claim 1, **characterized in that** the threshold is 20 square centimeters.

6. A method for unlocking a screen of a mobile phone, **characterized by**, comprising the steps set forth below:
S0, pre-setting a threshold for determining whether unlock the screen of the mobile phone according to a size of the screen and a size of a palm of the user;
S1, in a locking state, the mobile phone receiving an instruction from a user, lighting up the screen, and entering an unlocking interface, detecting whether a touching event occurs within a pre-determined time period; if the touching event is detected, entering a next step, otherwise, turning off a backlight of the screen of the mobile phone, and repeating this step;
S2, when the mobile phone has entered the unlocking interface and before a timer stops, the user touching the screen of the mobile phone, the mobile phone detecting the touching event, obtaining a profile information of coordinate matrix of the touching region corresponding to the touching event; and calculating a touching area according to the information of the touching region;
S3, comparing the touching area with a pre-determined threshold, and determining whether the touching event satisfies a condition required for unlocking;
S4, when the touching area is larger than the threshold, determining that the touching event satisfies the condition required for unlocking, and controlling to unlock the screen of the mobile phone, otherwise, returning information of unlocking failure to the user.

7. The method for unlocking a screen of a mobile phone as claimed in claim 6, **characterized in that** the step of calculating a touching area according to the information of the touching region in the step S2 is: dividing the touching region into a plurality of regular small shapes according to the profile information of coordinate matrix of the touching region, respectively calculating areas of the plurality of regular small shapes, and then adding together, so as to obtain the touching area.

8. The method for unlocking a screen of a mobile phone as claimed in claim 6, **characterized in that** the threshold is 20 square centimeters.

9. The method for unlocking a screen of a mobile phone as claimed in claim 6, **characterized in that** the step 1 further comprises: at the same time when entering the unlocking interface, starting the internal timer of the mobile phone, in a case if no touching event on the screen of the mobile phone has been detected within the pre-determined time period, turning off the backlight of the screen of the mobile phone, and executing a detection again; in a case if one touching event on the screen of the mobile phone has been detected, going to the step S2.

10. A system for unlocking a screen of a mobile phone, **characterized by**, comprising:
- a detection module, which is for detecting, when the mobile phone enters an unlocking interface, whether a touching event occurs on the screen of the mobile phone within a pre-determined time period, and when the touching event has been detected, obtaining information of a touching region corresponding to the touching event, and sending to a calculation module, otherwise, controlling to turn off a backlight of the screen of the mobile phone;
- the calculation module, which is for calculating a touching area according to the information of the touching region;
- a determination module, which is for comparing the touching area with a pre-determined threshold, and determining whether the touching event satisfies a condition required for unlocking, when the touching area is greater than the pre-determined threshold, making the determination that the touching event satisfies the condition required for unlocking, and sending an instruction for unlocking to a control module, otherwise, sending an instruction of unlocking failure to the control module;
- the control module, which is for, when receiving the instruction for unlocking, controlling to unlock the screen of the mobile phone, and when receiving the instruction of unlocking failure, returning information of unlocking failure to the user.

11. The system for unlocking a screen of a mobile phone as claimed in claim 10, **characterized by**, further comprising:
- a setting module, which is for setting the threshold for determining whether unlock the screen of the mobile phone according to a size of the screen and a size of a palm of the user.

12. The system for unlocking a screen of a mobile phone as claimed in claim 10, **characterized by**, wherein:
- the information of touching region is: profile information of coordinate matrix of the touching region; and
- the threshold is 20 square centimeters.

13. The system for unlocking a screen of a mobile phone as claimed in claim 10, **characterized in that** the calculation module comprises:
- a dividing unit, which is for dividing the touching region into a plurality of regular small shapes according to the profile information of coordinate matrix of the touching region, and then respectively calculating areas of the plurality of regular small shapes; and
- an addition unit, which is for adding the areas of the plurality of regular small shapes together, so as to obtain the touching area.
